# EUROPEAN PATENT SPECIFICATION

(11) **EP 0 292 733 B1**
(45) Date of publication and mention of the grant of the patent: **20.10.1993**
(21) Application number: 88106930.6
(22) Date of filing: 29.04.1988
(51) Int. Cl.: G11B 11/10

(54) **Magneto-optical disk reproduction apparatus**
Wiedergabegerät für magneto-optische Speicherplatten
Appareil de reproduction utilisant des disques magnéto-optiques

(30) Priority: 28.05.1987 JP 132392/87
(43) Date of publication of application: 30.11.1988
(73) Proprietor: SONY CORPORATION, Tokyo 141 (JP)
(72) Inventor: Horimai, Hideyoshi, Shinagawa-ku Tokyo (JP); Ogawa, Hiroshi, Shinagawa-ku Tokyo (JP)
(74) Representative: TER MEER STEINMEISTER & PARTNER GbR

(56) References cited:
- US-A- 3 593 333
- US-A- 4 691 308
- Patent Abstracts of Japan, vol. 10, no. 154, P-463, 2210, 4th June 1986; & JP-A-618753
- Patent Abstracts of Japan, vol. 10, no. 86, P-433, 2143, 4th April 1986; & JP-A-60 22304
- PHILIPS TECHNICAL REVIEW, Vol. 42, No. 2, August 1985

## Description

The present invention relates to an apparatus for reproducing a magneto-optical disk having a magneto-optical medium which permits information signals to be optically rewritten.

Such an apparatus is described in an article published by M. Hartmann et al. under the title "Erasable magneto-optical recording" published in Philips Technical Review, Vol. 42, No. 2, August 1985, pages 37 to 46. It comprises the following features:
- a laser light source for emitting a light beam to said magneto-optical disk at a predetermined sampling period;
- a first and a second detector for detecting each one of two differently polarized components of said light beam emitted from said laser light source and reflected from said magneto-optical disk; and
- a differential amplifier means for obtaining the difference between the output signals of said two detectors.

The differential detector used in this apparatus provides for a good C/N (carrier to noise) ratio. However, the prior art apparatus does not reduce any noise component.

The document JP-A-618753 describes an apparatus for reproducing a magneto-optical disc, which apparatus comprises a feedback circuit far controlling the gain of one of two differently polarized components of a light beam emitted from a laser light source and reflected from a magneto-optical disk. This feedback circuit comprises two low pass filters receiving detector signals associated to said two differently polarized components, a differential amplifier means for obtaining the difference between said two detector signals, and an integrating means for integrating the output signal of said differential amplifier means. In case that the two detector signals comprise noise signals, although the difference between these signals will contain noise. This noise can not be eliminated by the integrating means, but it can only be averaged.

It is the object of the present invention to provide an apparatus for reproducing a magneto-optical disk, which apparatus has an improved C/N ratio due to a reduction of random noise signals.

The apparatus of the present invention comprises the above listed features of the prior art apparatus, and it is characterized by
- a first and a second integrating means (21A, 21B; 32A, 32B) having low pass characteristics concerning the frequency of the information signals but having integrating characteristics concerning the frequency of certain noise signals.

These and other objects, features and advantages of the present invention will become apparent from the following detailed description of the preferred embodiment taken in conjunction with the accompanying drawings, throughout which like reference numerals designate like elements and parts. In the drawings:
Fig. 1 is a schematic circuit diagram showing a first embodiment of the present invention;
Fig. 2 is a schematic diagram showing a second embodiment of the present invention; and
Figs. 3A to 3F are waveform charts used to explain operations of the second embodiment.

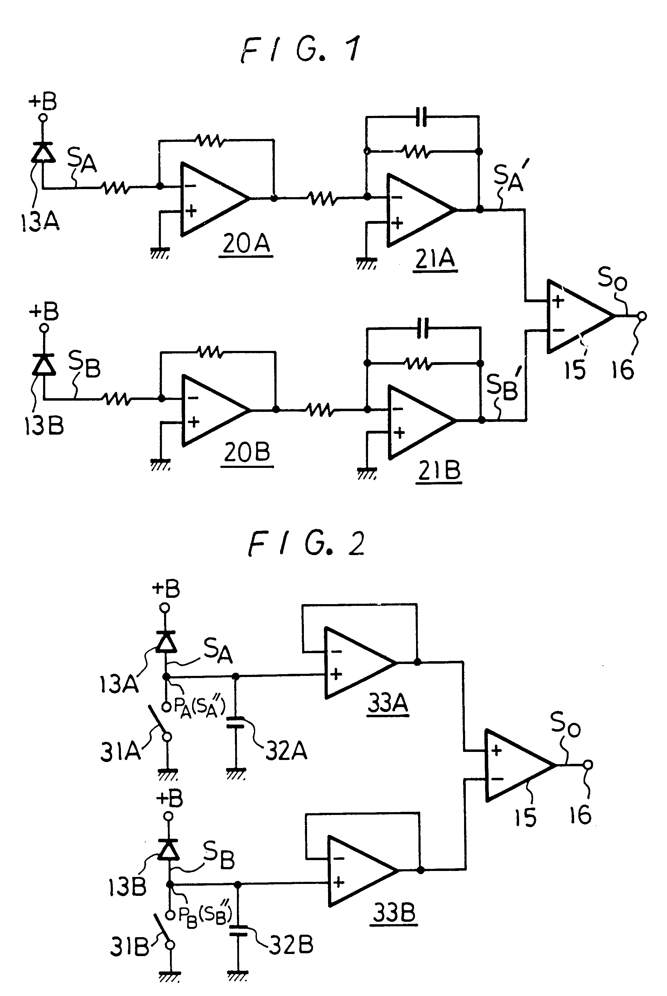

In Fig. 1, output signals S_{A} and S_{B} from photo-diodes 13A and 13B, corresponding to the two detectors of the prior art apparatus, are supplied to integrating circuits 21A and 21B, each formed of an operational amplifier, through current-to-voltage converting circuits 20A and 20B, respectively. The integrating circuits 21A and 21B have their constituting elements selected so as to provide a low pass characteristic such that data reproduced from the disk 1 can pass therethough. For example, if a maximal frequency of data is 7.5 MHz, the cut-off frequency thereof is chosen to be 15 MHz.

The output signals S_{A}' and S_{B}' from the integrating cirucits 21A and 21B are supplied to the differential amplifier 15 at its input terminals.

The rest of the first embodiment is constructed in the same manner as the prior art apparatus.

In the first embodiment, when the disk 1 is intermittently irradiated with the laser light at the sampling period, the photo-diodes 13A and 13B output the output signals S_{A} and S_{B}, both include random shot noise. The output signals S_{A}' and S_{B}' from the integrating circuits 21A and 21B include similar DC noises converted from the shot noise. Thus, the differential amplifier 15 delivers at the output terminal 16 the signal So without the DC noise.

In the first embodiment of the present invention as described above, the shot noise is converted to the DC noise by the integrating circuits 21A and 21B and removed by the differential amplifier 15, so that deterioration of the C/N ratio due to the shot noise is suppressed to thereby largely improve the C/N ratio. Although the shot noise is proportional to the square root of the incident light amount Io, the present embodiment enables the C/N ratio to be improved in proportion to the incident light amount Io by removing the shot noise.

Next, a second embodiment of the present invention will be explained with reference to Fig. 2 in which the parts corresponding to those in Fig. 1 are designated with the same reference numerals and the detailed explanation thereof will be omitted.

As is illustrated in Fig. 2, the anodes of the respective photo-diodes 13A and 13B are grounded through connecting switches 31A and 31B, respectively.

A connecting point P_{A} of the photo-diode 13A and the connecting switch 31A is grounded through a capacitor 32A. A signal S_{A}'' derived at the connecting point P_{A} is supplied through a buffer amplifier 33A to the differential amplifier 15 at one of its input terminals.

Further, a connecting point P_{B} of the photo-diode 13B and the connecting switch 31B is grounded through a capacitor 32B. A signal S_{B}'' derived at the connecting point P_{B} is supplied through a buffer amplifier 33B to the differential amplifier 15 at the other input terminal. The rest of the second embodiment is constructed similarly to the prior art apparatus.

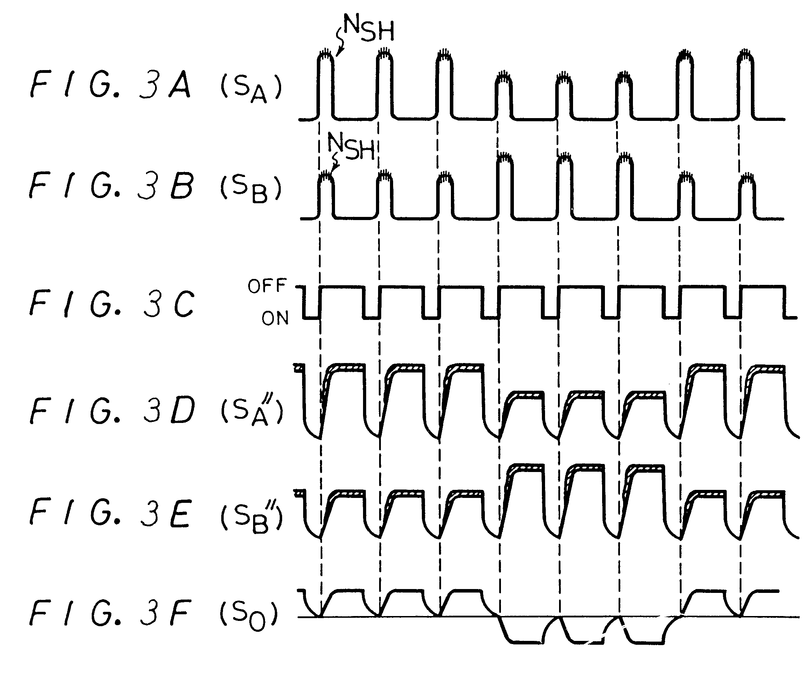

In the second embodiment, when the disk 1 is intermittently irradiated with the laser light at the sampling period, the photo-diodes 13A and 13B output the output signals S_{A} and S_{B} as shown in Figs. 3A and 3B, respectively. These output signals S_{A} and S_{B} each include the random shot noise N_{SH}.

The connecting switches 31A and 31B are on-off controlled at the sampling period with the timing as shown in Fig. 3C. When the connecting switches 31A and 31B are opened, the respective capacitors 32A and 32B are in a charging condition. On the contrary, when the connecting switches 31A and 31B are closed, the respective capacitors 32A and 32B are in a discharging condition.

Therefore, the signals S_{A}'' and S_{B}'' derived at the connecting points P_{A} and P_{B} are as shown in Figs. 3D and 3E, respectively. Hatched portions in Figs. 3D and 3E indicate the DC noise converted from the shot noise N_{SH} which are respectively included similarly in the signals S_{A}'' and S_{B}''. Thus, the differential amplifier 15 derives to the output terminal 16 the signal So free of the DC noise, as shown in Fig. 3F.

As described above, since the second embodiment is adapted to convert the shot noise to the DC noise and remove the converted DC noise in the same manner as the first embodiment shown in Fig. 1, the same effects as the first embodiment can be produced.

Further, although the above-mentioned embodiments have been described for the specific case of removing the shot noise N_{SH}, the present invention can be similarly adapted to remove other random noise.

According to the present invention as described above, since the integrating means are provided at the rear stage of the respective detectors to average the random noise such as shot noise (convert it to DC noise) or the like, the random noise can be easily removed, so that the C/N ratio can be largely improved.

## Claims

1. An apparatus for reproducing a magneto-optical disk (1) having a magneto-optical medium (3) which permits information signals to be optically rewritten, said apparatus comprising:
- a laser light source (5) for emitting a light beam to said magneto-optical disk at a predetermined sampling period;
- a first and a second detector (13A, 13B) for detecting each one of two differently polarized components of said light beam emitted from said laser light source and reflected from said magneto-optical disk; and
- a differential amplifier means (15) for obtaining the difference between the output signals from said detectors;
**characterized by**
- a first and a second integrating means (21A, 21B; 32A, 32B) having low pass characteristics concerning the frequency of the information signals but having integrating characteristics concerning the frequency of certain noise signals, each one allocated to a respective one of said first and second detectors (13A, 13B), for integrating the output signal of the respective detector and for supplying the integrated signals to said differential amplifier means.

2. An apparatus according to claim 1, **characterized in that** at least one of said integrating means is a parallel connection of a switch (31A; 31B), switched with said sampling period, and a capacitor (32A; 32B), this parallel circuit being connected in series with said detector (13A; 13B) between a voltage source (+B) and ground.

## Patentansprüche

1. Wiedergabegerät für magneto-optische Platten (1) mit einem magneto-optischen Medium (3), das es erlaubt, daß Informationssignale optisch überschrieben werden, welches Gerät folgendes aufweist:
- eine Laserlichtquelle (5) zum Emittieren eines Lichtstrahls auf die magneto-optische Platte mit einer vorgegebenen Abtastperiode;
- einen ersten und einen zweiten Detektor (13A, 13B) zum Erfassen jeder von zwei unterschiedlich polarisierten Komponenten des von der Laserlichtquelle emittierten und von der magneto-optischen Platte reflektierten Lichtstrahls; und
- eine Differenzverstärkereinrichtung (15) zum Erzielen der Differenz zwischen den Ausgangssignalen der Detektoren;
**gekennzeichnet durch**
- eine erste und eine zweite Integriereinrichtung (21A, 21B; 32A, 32B) mit Tiefpaßcharakteristik betreffend die Frequenz der Informationssignale, jedoch mit Integriercharakteristik betreffend die Frequenz bestimmter Rauschsignale, von denen jede einem jeweiligen Detektor unter dem ersten und zweiten Detektor (13A, 13B) zugeordnet ist, um das Ausgangssignal des jeweiligen Detektors zu integrieren, und um die integrierten Signale der Differenzverstärkereinrichtung zuzuführen.

2. Gerät nach Anspruch 1, **dadurch gekennzeichnet,** daß mindestens eine der Integriereinrichtungen eine Parallelschaltung aus einem mit der Abtastperiode geschalteten Schalter (31A; 31B) und einem Kondensator (32A; 32B) ist, die in Reihe mit dem Detektor (13A; 13B) zwischen eine Spannungsquelle (+B) und Masse geschaltet ist.

## Revendications

1. Appareil de reproduction à disque magnéto-optique (1) ayant un support magnéto-optique (3) qui permet aux signaux d'information d'être écrits optiquement, ledit appareil comprenant :
- une source lumineuse laser (5) pour émettre un faisceau lumineux sur ledit disque magnéto-optique avec une période d'échantillonnage prédéterminée;
- Un premier et un second détecteur (13A, 13B) pour détecter chacune des deux composantes polarisées différemment dudit faisceau lumineux émis par ladite source lumineuse laser et réfléchie par ledit disque magnéto-optique; et
- un dispositif amplificateur différentiel (15) pour obtenir la différence entre les signaux de sortie desdits deux détecteurs;
Caractérisé par
un premier et un second dispositif d'intégration (21A, 21B; 32A, 32B) ayant des caractéristiques passe-bas concernant la fréquence des signaux d'information mais ayant des caractéristiques d'intégration concernant la fréquence de certains signaux de bruit, chacun étant alloué à un desdits premier et second détecteurs (13A, 13B) respectifs, pour intégrer le signal de sortie du détecteur respectif et pour fournir des signaux intégrés auxdits dispositifs amplificateurs différentiels.

2. Appareil selon la revendication 1, caractérisé en ce qu'au moins un desdits dispositifs d'intégration est relié en parallèle à un commutateur (31A; 31B), commuté lors de ladite période d'échantillonnage et à un condensateur (32A; 32B), ce circuit parallèle étant relié en série auxdits détecteurs (13A; 13B) entre une source de tension (+B) et la masse.
